# EUROPÄISCHE PATENTSCHRIFT

(11) **EP 1 313 367 B1**
(45) Veröffentlichungstag und Bekanntmachung des Hinweises auf die Patenterteilung: **09.11.2005**
(21) Anmeldenummer: 01957965.5
(22) Anmeldetag: 13.07.2001
(51) Int. Cl.: A01N 37/36, A01N 47/36

(54) **HERBIZIDE MITTEL**
HERBICIDES
AGENT HERBICIDE

(30) Priorität: 25.07.2000 DE 10036003
(43) Veröffentlichungstag der Anmeldung: 28.05.2003
(73) Patentinhaber: Bayer CropScience GmbH, 65929 Frankfurt (DE)
(72) Erfinder: BICKERS, Udo, 49835 Wietmarschen (DE); BIERINGER, Hermann, 65817 Eppstein (DE); FRISCH, Gerhard, 61273 Wehrheim (DE); HACKER, Erwin, 65239 Hochheim (DE); HUFF, Hans, Philipp, 65817 Eppstein (DE)
(74) Vertreter: Schwenk, Norbert
(86) Internationale Anmeldenummer: PCT/EP2001/008125
(87) Internationale Veröffentlichungsnummer: WO 2002/007515

(56) Entgegenhaltungen:
- WO-A-89/12394
- WO-A-93/25074
- WO-A-99/24427

## Beschreibung

Die Erfindung betrifft das technische Gebiet der Pflanzenschutzmittel, insbesondere Wirkstoff Silikontensid-Humectant-Kombinationen.

Zur Bekämpfung unerwünschter Schadpflanzen stehen dem Anwender eine Vielzahl von Herbiziden zur Verfügung, die in Abhängigkeit von den biologischen Eigenschaften der Herbizide, der Art der zu bekämpfenden Schadpflanzen und der Art der Nutzpflanzen zum Einsatz gelangen können. Dabei werden die herbiziden Wirkstoffe so zubereitet, daß sie möglichst optimal anzuwenden sind und eine hohe Wirksamkeit besitzen. Zur Anwendung kommen dabei verschiedene Formulierhilfsmittel wie Netzmittel, Dispergiermittel, Emulgatoren, Entschäumer, Lösungsmittel oder Füllstoffe.

Die Sicherheit und das Niveau der Schadpflanzenkontrolle variiert jedoch in Abhängigkeit von Umweltfaktoren wie Temperatur, Luft- und Bodenfeuchte, Lichteinstrahlung, Niederschlägen oder Bodenart, was bei Minderwirkung zu Nachbehandlungen oder bei Überdosierung Schädigung von Nutzpflanzen führen kann.

Eine höhere Wirkungssicherheit bietet auch ökologische Vorteile. Um einer Minderwirkung zu entgehen, erhöht der Anwender häufig die auszubringende Wirkstoffmenge. Diese Verhaltensweise hat jedoch den Nachteil, dass das Potential der Wirkstoffe, die Bodenfauna zu beeinflussen, im Boden zu leachen oder in Oberflächengewässer getragen zu werden, steigt.

In Adjuvants for Agrochemicals, CRC Press, Inc. (1992) S. 261 - 271 wird der Einfluß von Humectants auf verschiedene Pestizide beschrieben. Aus WO 89/02570 ist bekannt, dass Humectants in Verbindung mit Silikontensiden die Wirksamkeit von Herbiziden steigern können. WO 89/12394 beschreibt die Steigerung der Wirksamkeit von Sämtlichen Herbiziden mit Silikontensiden und Humectants.

Aufgabe der vorliegenden Erfindung war es, ein herbizides Mittel mit verbessertem Wirkniveau und verbesserter Wirkungssicherheit zur Verfügung zu stellen. Diese Aufgabe wird gelöst durch ein herbizides Mittel, welches spezielle Sulfonamide in Kombination mit Silikontensiden und Humectants enthält.

Die vorliegende Erfindung betrifft somit ein herbizides Mittel, enthaltend
a) einen oder mehrere herbizide Wirkstoffe aus der Gruppe der gräserwirksamen Sulfonylharnstoffe der Formel (1) und/oder deren Salze 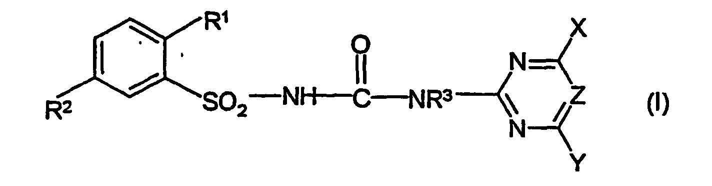 worin
   - R¹: CO-R^{a} ist, worin R^{a} gleich OH, C₁-C₄-Alkoxy oder NR^{b}R^{c} ist, worin R^{b} und R^{c} unabhängig voneinander gleich oder verschieden H oder C₁-C₄-Alkyl sind,
   - R²: Halogen oder (A)ₙ-NR^{d}R^{e} ist, worin n gleich Null oder 1 ist, A eine Gruppe CR'R" ist, worin R' und R" unabhängig voneinander gleich oder verschieden H oder C₁-C₄-Alkyl sind, R^{d} gleich H oder C₁-C₄-Alkyl ist und R^{e} ein Acyl-Rest ist,
   - R³: H oder C₁-C₄-Alkyl ist,
   - X und Y: unabhängig voneinander gleich oder verschieden C₁-C₆-Alkyl, C₁-C₆-Alkoxy oder C₁-C₆-Alkylthlo sind, wobei jeder der drei genannten Reste unsubstituiert oder durch einen oder mehrere Reste aus der Gruppe Halogen, C₁-C₄-Alkoxy und C₁-C₄-Alkylthio substituiert ist, oder C₃-C₆-Cycloalkyl, C₂-C₆-Alkenyl, C₂-C₆-Alkynyl, C₃-C₆-Alkenyloxy oder C₃-C₆-Alkynyloxy sind, vorzugsweise C₁-C₄-Alkyl oder C₁-C₄-Alkoxy, und
   - Z: gleich CH oder N ist.
b) eines oder mehrere Silikontenside, und
c) eines oder mehrere Humectants.

Unter den in dem erfindungsgemäßen herbiziden Mittel als Komponente a) enthaltenen gräserwirksamen Sulfonylharnstoffen werden Sulfonylharnstoffe verstanden, die monokotyle Schadpflanzen in ihrem Wuchs nachhaltig hemmen. Insbesondere werden hiermit Sulfonylharnstoffe umfaßt, die vom Hersteller zum Einsatz gegen monokotyle Schadpflanzen empfohlen werden, zB. in den jeweiligen Produktbroschüren oder im Pesticide Manual, 12. Auflage (2000), British Crop Protection Councel.

Besonders geeignete Wirkstoffe aus der Gruppe der gräserwirksamen Sulfonylhamstoffe sind lodosulfuron-methyl, Foramsulfuron (Agrow Nr. 338, PJB Publications Ltd. 1999, Seite 26) und Mesosulfuron-methyl und/oder deren Salze (Agrow Nr. 347, PJB Publications Ltd. 2000, Seite 22).

Beispiele für Sulfonylhamstoffe der Formel (I) und/oder deren Salze sind Mesosulfuron-methyl, Mesosulfuron-methyl-Natrium, lodosulfuron-methyl, lodosulfuron-methyl-Natrium, Foramsulfuron und Foramsulfuron-Natrium.

Als Salze der Sulfonamide a) wie Sulfonylhamstoffe kommen z.B. Verbindungen in Frage, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCI, HBr, H₂SO₄ oder HNO₃.

Unter den als Komponente b) in dem erfindungsgemäßen herbiziden Mittel enthaltenen Silikontensiden werden Tenside verstanden, die zumindest ein Siliziumatom, vorzugsweise 2 bis 2000 Siliziumatome enthalten.

Die in den erfindungsgemäßen herbiziden Mitteln enthaltenen Silikontenside b) sind zum Beispiel Polyalkylenoxid-modifizierte Dimethylpolysiloxan-Copolymere, die z.B. unter dem Warenzeichen Silwet der Witco/Osi Corp. früher Union Carbide Corporation (USA) vertrieben werden. Hierbei handelt es sich um oberflächenwirksame Materialien mit diskreten hydrophilen (wasseranziehenden) und hydrophoben (wasserabweisenden) Segmenten. Sie haben folgende allgemeine Formel (1), 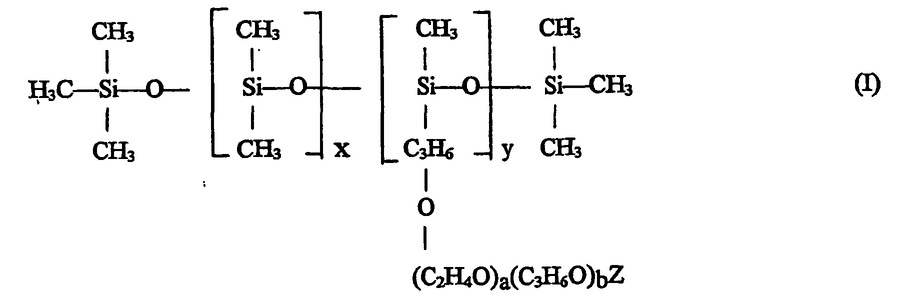 worin a eine ganze Zahl von 3-24 ist, b eine ganze Zahl von 0-15 ist, x eine ganze Zahl von 0-3 ist und y eine ganze Zahl von 1-5 ist, und Z ist Wasserstoff, C₁-C₃-Alkyl oder eine Acylgruppe mit 2 bis 4 Kohlenstoffatomen.

Zu den Silwet-Silikontensiden gehören auch die im Prospekt der Union Carbide mit dem Titel "Silicones For the Agricultural Industry" SUI-356, 6/84, 5M und in "Surface Active Copolymers", SUI-394A, 7/85-5M, ebenfalls von Union Carbide, beschriebenen Produkte.

Weitere geeignete Silikontenside, die im Rahmen der vorliegenden Erfindung verwendet werden können, sind zB. SF-1188 (General Electric Company, Silicone Products Division, Rubber & Fluid Products Department, Waterford, NY 12188), Silwet L-7607, die Silikonglykole Q2-5309, Q2-5152, Q2-5852 und Q2-5853 der Dow Coming Corporation, Midland, MI, sowie Gemische davon und ähnliche Produkte. Silikontenside mit der Formel (1) werden insbesondere in dem US-Patent 3,299,112 beschrieben. Ein besonders bevorzugtes Silikontensid hat die Formel Me₃SiO[MeO(C₂H₄O)₇C₃H₆SiMeO]SiMe_{3,} worin Me *=* Methyl ist

Geeignete Silikontenside b) sind auch Silikonglykole, z.B. der allgemeinen Formel (11): 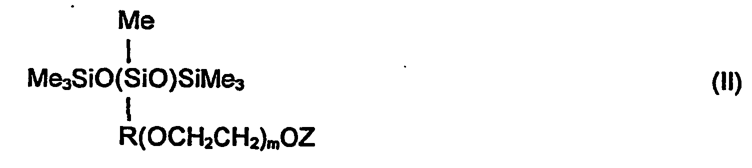 wobei Me im folgenden einen Methylrest bezeichnet, R eine zweiwertige Alkylengruppe mit 2 bis 6 Kohlenstoffatomen wie Ethylen, Trimethylen, Tetramethylen oder Hexamethylen, vorzugsweise Trimethylen ist, m eine ganze Zahl von 3-24 ist und Z Wasserstoff, ein C₁-C₃- Alkylrest oder eine Acylgruppe mit 2 bis 4 Kohlenstoffatomen, vorzugsweise eine Acetoxygruppe ist.

Die oben beschriebenen Silikonglykole sind in der Fachwelt bekannt und können z.B. durch Kupplung des entsprechenden Glykols, welches eine Allyl-Endgruppe aufweist, an eine Bis-Siloxanstruktur mit einem Wasserstoffatom am zentralen Siliziumatom hergestellt werden, wobei sich die Bis-Siloxanstruktur wie folgt darstellen läßt (worin Me=Methyl ist):

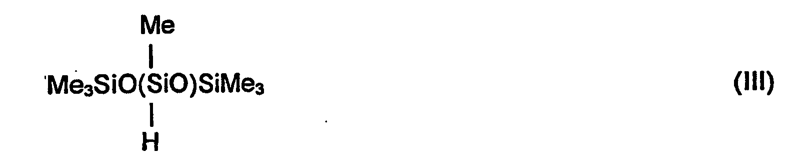

Im allgemeinen erfolgt diese Kupplung in Anwesenheit eines Platinkatalysators. In der Fachwelt ist bekannt, daß bei solchen Kupplungsreaktionen ein Teil des Glykols mit der Allyl-Endgruppe nicht umgesetzt wird und im Silikonglykol-Endprodukt als Verunreinigung verbleibt. Auch herbizide Mittel, die solche Verunreinigungen enthalten sind von der vorliegenden Erfindung umfaßt.

Silikonglykol-Silikonalkan-Terpolymere eignen sich ebenfalls als erfindungsgemäß enthaltene Silikontenside b). Diese Verbindungen lassen sich z.B. durch die folgende allgemeine Formel (IV) darstellen: 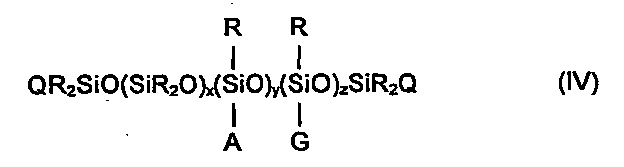 ,worin R gleiche oder voneinander verschiedene C₁-C₆-Alkylreste sind, A ein C₇-C₃₀-Alkylrest ist, G eine Glykoleinheit mit der Formel -R'(OCH₂CH₂)ₘOZ darstellt, wobei R' eine zweiwertige C₁-C₆- Alkylengruppe und Z Wasserstoff, ein C₁-C₃- Alkylrest oder eine C₂-C₄-Acylgruppe ist, und m eine ganze Zahl von 8-100 ist; Q gleich oder voneinander verschieden ausgewählt sind aus den Bedeutungen für den genannten Alkylrest A, die genannte Glykoleinheit G und den genannten Alkylrest R; x für eine ganze Zahl von 0 bis 100, y für eine ganze Zahl von 0 bis 25 und z für eine ganze Zahl von 0 bis 50 steht und die Summe x+y+z ≥ 1 ist.

Ein besonders bevorzugtes Silikonglykol-Silikonalkan-Terpolymer der Formel (IV), das sich für die vorliegende Erfindung als Silikontensid eignet, hat folgende allgemeine Formel (V): 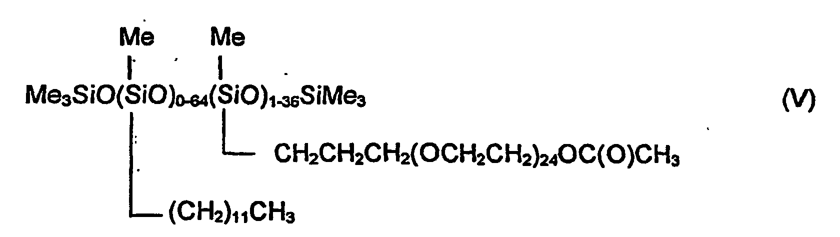 worin Me einen Methylrest bezeichnet.

Das oben beschriebene Silikonglykol-Silikonalkan-Terpolymer läßt sich mit Methoden, die in der Fachwelt gut bekannt sind, herstellen. Beispielsweise kann das entsprechende Glykol, welches eine Allyl-Endgruppe aufweist, mit einem α-Alken zu einem SiH-funktionellen Siloxan gekoppelt werden, welches die folgende allgemeine Formel (VI) aufweist 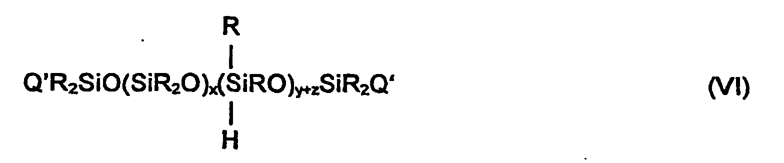 worin R, x, y und z die vorstehend in Formel (IV) angegebene Bedeutung haben und Q' gleich oder voneinander verschieden Wasserstoff sind oder die für R angegebenen Bedeutungen haben.

Zur Herstellung des oben beschriebenen, besonders bevorzugten Silikonglykol-Silikonalkan-Terpolymers werden 0,77 Mol α-Dodecen und 1,90 Mol eines Glykols mit Allyl-Endgruppe der Formel CH₂=CHCH₂(OCH₂CH₂)₂₄OC(O)CH₃ umgesetzt mit 1 Mol eines SiH-funktionellen Siloxans mit der folgenden allgemeinen Formel (VII) 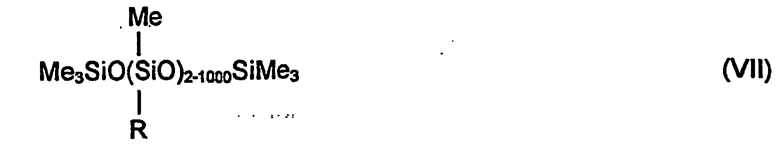 worin R=H, C₁-C₆-Alkyl, C₁-C₆-Hydroxyalkyl ist, um 1 Mol des Terpolymers zu erhalten. Die Kupplung erfolgt in Anwesenheit eines Platinkatalysators bei Temperaturen in einem Bereich von ca. 20°C bis ca. 150°C. Die Reaktion wird bevorzugt in einem Lösungsmittel wie Toluol oder Isopropanol durchgeführt.

Weiterhin bevorzugte Silikontenside b) sind Polyalkylsiloxane z.B. vom Typ der Verbindungen der Formel (VII) wie die Tegopren® Marken von Goldschmidt und die E® und SE®-Marken vcn Wacker, sowie die Rhodorsil®- und Silcolapse®-Marken von Rhodia und die Bevaloid®- Marken von Dow Coming.

Unter einem Humectant im Sinne der vorliegenden Erfindung wird eine Verbindung verstanden, welche in der Lage ist Wasser physikalisch aufzunehmen und/oder Wasser zu speichern. Bevorzugte Humectants sind z.B. hydroskopische Verbindungen.

Als Humectant c) können in den erfindungsgemäßen herbiziden Mitteln z.B. folgende Stoffe enthalten sein:
Mg SO₄, mehrwertige Alkohole wie Ethylenglykol, Propylenglykol, Butandiol, Glycerin und Pentaerythrid, sowie deren Ether und Ester, z.B. Ethylen, Glykolether, Propylenglykolether oder Glycerinester,
Polyalkylenglykole wie Polyethylenglykole (vorzugsweise mit einem Molekulargewicht von 500 - 60.000), Polypropylenglykole (vorzugsweise mit einem Molekulargewicht von 600 - 75.000) und Ethylenoxid (EO) - Propylenoxid (PO) - Mischpolymerisate z.B. mit EO-PO-, EO-PO-EO- oder PO-EO-PO-Einheiten;
Zucker wie Hexosen, Pentosen, Molasse, Alkylpolysaccharide und Xanthane, z.B. die Maltitol®-Marken von Salim Oleo Chemicals wie Maltitol®75; Gelatine;
Cellulosederivate wie wasserlösliche Ligninsulfonate oder Hydroxycellulosen; Zitronensäure und Zitronensäurederivate wie Zitronensäuresalze, zB. Alkali-, Erdalkali- oder Ammoniumzitronensäuresalze wie Na-Citrat; Milchsäure und Milchsäurederivate wie Milchsäuresalze, z.B. Alkali-, Erdalkali- oder Ammoniummilchsäuresalze wie Na-Lactat, zB. in Form ihrer Racemate.(DL) oder der einzelnen optischen Isomere, z.B. D-Na-Lactat und L-Na-Lactat; Weinsäure und Weinsäurederivate wie Weinsäuresalze, z.B. Alkali-, Erdalkali- oder Ammoniumweinsäuresalze wie Na-Tartrat, z.B. in Form ihrer Racemate (Traubensäure) oder der einzelnen optischen Isomere, z.B. (+)-Na-Tartrat und (-)-Na-Tartrat; Asparaginsäure und Asparaginsäurederivate wie Asparaginsäuresalze, z.B. Alkali-, Erdalkali- oder Ammoniumasparaginsäuresalze wie Na-Asparagat, z.B. in Form ihrer Racemate (DL) oder der einzelnen optischen Isomere, z.B. D-Na-Asparagat und L-Na-Asparagat; Succinate wie die Triton®-Marken von Rohm und Haas; Polyvinylverbindungen wie modifiziertes Polyvinylpyrrolidon wie die Luviskol®-Marken von BASF und die Agrimer®-Marken von ISP oder die derivatisierten Polyvinylacetate wie die Mowilith®-Marken von Clariant oder die Polyvinylbutyrate wie die Lutonal®-Marken von der BASF, die Vinnapas®- und die Pioloform®-Marken von Wacker oder die modifizierten Polyvinylalkohole wie die Mowiol®-Marken von Clariant Bevorzugte Humectants sind mehrwertige Alkohole wie Ethylenglykol oder Propylenglykol sowie Milchsäure und Milchsäurederivate wie Milchsäuresalze, z. B. Alkali-, Erdalkali- oder Ammoniummilchsäuresalze wie Na-Lactat, z.B. in Form ihrer Racemate (DL) oder der einzelnen optischen lsomere, z.B. D-Na-Lactat und L-Na-Lactat.

Üblicherweise enthalten die erfindungsgemäßen herbiziden Mittel
a) 0,0001 bis 99 Gew.-%, vorzugsweise 0,1 bis 95 Gew.-%, eines oder mehrerer gräseraktiver Sulfonamide,
b) 0,1 bis 97 Gew.-% eines oder mehrerer Silikontenside, und
c) 0,1 bis 90 Gew.-% eines oder mehrerer Humectants.

Die erfindungsgemäßen herbiziden Mittel zeigen ausgezeichnete herbizide Wirkung. Aufgrund der verbesserten Kontrolle der Schadpflanzen durch die erfindungsgemäßen herbiziden Mittel wird es möglich, die Aufwandmenge zu senken und/oder die Sicherheitsmarge zu erhöhen. Beides ist sowohl ökonomisch als auch ökologisch sinnvoll.

In bevorzugter Ausführungsform kennzeichnen sich erfindungsgemäße herbizide Mittel dadurch, daß sie einen synergistisch wirksamen Gehalt einer Kombination der Herbizide a) mit Tensiden b) und Humectants c) aufweisen. Dabei ist vor allem hervorzuheben, daß selbst in Kombinationen mit Aufwandmengen oder Gewichtsverhältnissen von a) : b): c) bei denen ein Synergismus nicht in jedem Falle ohne weiteres nachzuweisen ist - etwa weil die Einzelverbindungen üblicherweise in der Kombination in sehr unterschiedlichen Aufwandmengen eingesetzt werden oder auch weil die Kontrolle der Schadpflanzen bereits durch die Einzelverbindungen sehr gut ist - den herbiziden Mitteln der Erfindung in der Regel eine synergistische Wirkung inhärent ist.

Die Herstellung der erfindungsgemäßen herbiziden Mittel erfolgt durch übliche Verfahren, z.B. Mahlen, Mischen, Lösen oder Dispergieren der Einzelkomponenten.

Die Komponenten a), b) und c) der erfindungsgemäßen herbiziden Mittel können zusammen in einer Fertigformulierung enthalten sein, die dann in üblicher Weise, z.B. im Form einer Spritzbrühe appliziert werden kann oder sie können separat formuliert werden und z.B. im Tank-Misch-Verfahren oder nacheinander appliziert werden. Wenn die Komponenten separat formuliert werden, können die Komponenten a), b) und c) z.B. jeweils einzeln formuliert werden oder die Komponenten a) und b), a) und c) oder b) und c) können gemeinsam formuliert werden und die jeweilige Drittkomponente wird separat formuliert.

Die erfindungsgemäßen herbiziden Mittel können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), wasserlösliche Pulver (SP), wasserlösliche Konzentrate, emulgierbare Konzentrate (EC), Emulsionen (EW), wie Öl-in-Wasser- und Wasser in-ÖI-Emulsionen, versprühbare Lösungen, Suspensionskonzentrate (SC), Dispersionen auf Öl- oder Wasserbasis, ölmischbare Lösungen, Kapselsuspensionen (CS), Stäubemittel (DP), Beizmittel, Granulate für die Streu- und Bodenapplikation, Granulate (GR) in Form von Mikro-, Sprüh-, Aufzugs- und Adsorptionsgranulaten, wasserdispergierbare Granulate (WG), wasserlösliche Granulate (SG), ULV-Formulierungen, Mikrokapseln und Wachse. Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986, Wade van Valkenburg, "Pesticide Formulations", Marcel Dekker, N.Y., 1973; K Martens, "Spray Drying" Handbook, 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of lnsecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen agrochemischen Wirkstoffen wie Insektiziden, Akariziden, Herbiziden, Fungiziden, Safenem, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Herbizid a) und / oder Tensid b) und / oder Humectant c) noch Verdünnungs- oder inertstoffe und gegebenenfalls noch andere von den Silikontensiden b) verschiedene Tenside ionischer und/oder nichtionischer Art (Netzmittel, Dispergiermittel) z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die Herbizide a) und/oder Tenside b) und/oder Humectants c) beispielsweise in üblichen Apparaturen wie Hammermühlen, Gebläsemühlen und Luftstrahlmühlen feingemahlen und gleichzeitig oder anschließend mit den Formulierungshilfsmitteln vermischt.

Emulgierbare Konzentrate werden durch Auflösen des Herbizids a) und/oder Tensids b) und/oder Humectants c) in einem organischen Lösungsmittel z.B. Butanol, Cyclohexanon, Dimethylformamid, Xylol oder auch höhersiedenden Aromaten oder Kohlenwasserstoffen oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calzium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanester wie z. B. Sorbitanfettsäureester oder Polyoxethylensorbitanester wie z. B. Polyoxyethylensorbitanfettsäureester.

Stäubemittel erhält man durch Vermahlen des Herbizids a) und/oder Tensids b) und/oder Humectants c) mit fein verteilten festen Stoffen, zB. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von den Silikontensiden b) verschiedenen Tensiden, wie sie z.B. oben bei den anderen Formulierungstypen bereits aufgeführt sind, hergestellt werden.

Emulsionen, z.B. ÖI-in-Wasser Emulsionen (EW), lassen sich beispielsweise mittels Rührern, Kolloidmühlen und/oder statischen Mischem unter Verwendung von wäßrigen organischen Lösungsmitteln und gegebenenfalls von den Silikontensiden b) verschiedenen Tensiden, wie sie z.B. oben bei den anderen Formulierungstypen bereits aufgeführt sind, herstellen.

Granulate können entweder durch Verdüsen des Herbizids a) und/oder Tensids b) und/oder Humectants c) auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Herbizide a) und/oder Tensids b) und/oder Humectants c) in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischem und Extrusion ohne festes Inertmaterial hergestellt. Zur Herstellung von Teller-, Fließbett-, Extruder- und Sprühgranulate siehe zB. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe zB. G.C. Klingman, "Weed Control as a Science", John Wiley and Sons, Inc., New York, 1961, Seiten 81-96 und J.D. Freyer, S.A Evans, "Weed Control Handbook", 5th Ed., Blackwell Scientific Publications, Oxford, 1968, Seiten 101-103.

Daneben enthalten die genannten Wirkstofformulierungen gegebenenfalls die jeweils üblichen Zusatzstoffe wie Haft-, Netz-, Dispergier-, Emulgier-, Penetrations-, Konservierungs-, Frostschutz- und Lösungsmittel, Füll-, Träger und Farbstoffe, Entschäumer, Verdunstungshemmer und den pH-Wert und die Viskosität beeinflussende Mittel.

Der Einsatz der erfindungsgemäßen herbiziden Mittel kann im Vor- oder im Nachauflaufverfahren erfolgen, z. B. durch Spritzung. Durch den Einsatz der erfindungsgemäßen herbiziden Mittel kann der zur Unkrautbekämpfung notwendige Präparateaufwand wesentlich reduziert werden.

Die erfindungsgemäß zu verwendenden Herbizide a) werden in der Regel zusammen mit dem bzw. den Tensiden b) und Humectants c) oder hintereinander ausgebracht, vorzugsweise in Form einer Spritzbrühe, welche die Herbizide a), die Tenside b) und die Humectants c) in wirksamen Mengen und gegebenenfalls weitere übliche Hilfsmittel enthält. Die Spritzbrühe wird bevorzugt auf Basis von Wasser und / oder einem Öl, zB. einem hochsiedenden Kohlenwasserstoff wie Kerosin oder Paraffin hergestellt. Dabei können die erfindungsgemäßen herbiziden Mittel als Tankmischung oder über eine "Fertig-Formulierung" realisiert werden.

In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 1 bis 90, vorzugsweise 5 bis 80 Gew.-% betragen. Staubförmige Formulierungen enthalten 1 bis 30 Gew.-% Wirkstoff, vorzugsweise meistens 5 bis 20 Gew.-% an Wirkstoff, versprühbare Lösungen enthalten etwa 0,05 bis 80, vorzugsweise 2 bis 50 Gew.-% Wirkstoff. Bei wasserdispergierbaren Granulaten hängt der Wirkstoffgehalt zum Teil davon ab, ob die wirksame Verbindung flüssig oder fest vorliegt und welche Granulierhilfsmittel, Füllstoffe usw. verwendet werden. Bei den in Wasser dispergierbaren Granulaten liegt der Gehalt an Wirkstoff beispielsweise zwischen 1 und 95 Gew.-%, vorzugsweise zwischen 10 und 80 Gew.-%.

Der Anteil an Tensid b) in konzentrierten Formulierungen kann naturgemäß nicht beliebig erhöht werden; ohne die Stabilität der Formulierung zu beeinträchtigen. In den konzentrierten Formulierungen ist das Gewichtsverhältnis Herbizid a): Tensid b) im allgemeinen von 1000:1 bis 1:10000, vorzugsweise 200:1 bis 1:200; das Gewichtsverhältnis Herbizid a): Humectant c) ist im allgemeinen von 1000:1 bis 1:10000, vorzugsweise 200:1 bis 1:200; und das Gewichtsverhältnis Tensid b) : Humectant c) ist im allgemeinen 1000:1 bis 1:1000, vorzugsweise 200:1 bis 1:200.

Bei der Applikation ist das Gewichtsverhältnis Herbizid a): Tensid b) im allgemeinen im Bereich 1000:1 bis 1:100.000, insbesondere 200:1 bis 1:1000 in Abhängigkeit von der Wirksamkeit des jeweiligen Herbizids. Das Gewichtsverhältnis Herbizid a): Humectant c) ist bei der Applikation im allgemeinen im Bereich 1000:1 bis 1:100000, insbesondere 200:1 bis 1:200 in Abhängigkeit von der Wirksamkeit des jeweiligen Herbizids. Das Gewichtsverhältnis Tensid b): Humectant c) ist bei der Applikation im allgemeinen im Bereich von 1000:1 bis 1:1000, vorzugsweise 200:1 bis 1:200.

Bei der Applikation ist die Konzentration an Herbizid a) im allgemeinen bei 0,0001 bis 20 Gew.-%, vorzugsweise bei 0,01 bis 3 Gew.-% in dem applizierten Mittel, z.B. der Spritzbrühe bei einer Aufwandmenge von 5 bis 4000 I/ha, vorzugsweise 100 bis 600 I/ha. Die Konzentration an Tensid b) ist im allgemeinen bei 0,001 bis 5 Gew.-%, vorzugsweise 0,1 bis 2,0 Gew.-%, insbesondere 0,1 bis 0,5 Gew.-% in dem applizierten Mittel, z.B., der Spritzbrühe bei einer Aufwandmenge von 5 bis 4000 I/ha, vorzugsweise 100 bis 600 l/ha. Die Konzentration an Humectant c) ist im allgemeinen bei 0,001 bis 20 Gew.-%, vorzugsweise bei 0,01 bis 5 Gew.-% Humectant c) in dem applizierten Mittel, z.B. der Spritzbrühe bei einer Aufwandmenge von 5 bis 4000 I/ha, vorzugsweise 100 bis 600 l/ha.

Die erfindungsgemäßen herbiziden Mittel können neben den Tensiden b) auch noch weitere Tenside ionischer und nichtionischer Art enthalten, wie Tenside auf Aromatenbasis, z.B. oberflächenaktive mit einer oder mehreren Alkylgruppen substituierte und nachfolgend derivatisierte Benzole oder Phenole, oder Tenside auf nichtaromatischer Basis, z.B. auf Heterocyclen-, Olefin-, Aliphaten- oder Cycloaliphatenbasis, beispielsweise oberflächenaktive mit einer oder mehreren Alkylgruppen substituierte und nachfolgend derivatisierte Pyridin-, Pyrimidin-, Triazin-, Pyrol-, Pyrollidin-, Furan-, Thiophen-, Benzoxazol-, Benzthiazol- und Triazolverbindungen.

Beispiele für aromatische Tenside sind:
1) Phenole, Phenyl-(C₁-C₄)alkyl-ether oder (poly)alkoxylierte Phenole [= Phenol-(poly)alkylenglykolether], beispielsweise mit 1 bis 50 Alkylenoxy-Einheiten im (Poly)alkylenoxyteil, wobei der Alkylenteil vorzugsweise jeweils 1 bis 4 C-Atome aufweist, vorzugsweise mit 3 bis 10 mol Alkylenoxid umgesetztes Phenol,
2) (Poly)alkylphenole oder (Poly)alkylphenolalkoxylate [= Polyalkylphenol-(poly)alkylenglykolether], beispielsweise mit 1 bis 12 C-Atomen pro Alkylrest und 1 bis 150 Alkylenoxy-Einheiten im Polyalkylenoxyteil, vorzugsweise mit 1 bis 50 mol Ethylenoxid umgesetztes Tri-n-butylphenol oder Triisobutylphenol,
3) Polyarylphenole oder Polyarylphenolalkoxylate [= Polyarylphenol-(poly)alkylenglykolether], beispielsweise Tristyrylphenolpolyalkylenglykolether mit 1 bis 150 Alkylenoxy-Einheiten im Polyalkylenoxyteil, vorzugsweise mit 1 bis 50 mol Ethylenoxid umgesetztes Tristyrylphenol,
4) Verbindungen, die formal die Umsetzungsprodukte der unter 1) bis 3) beschriebenen Moleküle mit Schwefelsäure oder Phosphorsäure darstellen und deren mit geeigneten Basen neutralisierte Salze, beispielsweise der saure Phosphorsäureester des dreifach ethoxylierten Phenols, der saure Phosphorsäureester eines mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol, sowie
5) saure und mit geeigneten Basen neutralisierte (Poly)alkyl- und (Poly)aryl-benzolsulfonate, beispielsweise mit 1 bis 12 C-Atomen pro Alkylrest bzw. mit bis zu 3 Styroleinheiten im Polyarylrest, vorzugsweise (lineare) Dodecylbenzolsulfonsäure und deren öl-lösliche Salze wie beispielsweise das lsopropylammoniumsalz der Dodecylbenzolsulfonsäure.

Bei den Alkylenoxy-einheitän sind Ethylenoxy-, Propylenoxy- und Butylenoxyeinheiten, insbesondere Ethylenoxyeinheiten bevorzugt. Bevorzugte Tenside aus der Gruppe der Tenside auf Aromatenbasis sind insbesondere beispielsweise mit 4 bis 10 mol Ethylenoxid umgesetztes Phenol, kommerziell beispielsweise in Form der Agrisol®-Marken (Akcros) erhältlich, mit 4 bis 50 mol Ethylenoxid umgesetztes Triisobutylphenol, kommerziell beispielsweise in Form der Sapogenat®T-Marken (Clariant) erhältlich, mit 4 bis 50 mol Ethylenoxid umgesetztes Nonylphenol, kommerziell beispielsweise in Form der Arkopal®-Marken (Clariant) erhältlich, mit 4 bis 150 mol Ethylenoxid umgesetztes Tristyrylphenol, beispielsweise Soprophor®CY/8 (Rhodia) und saures (lineares) Dodecylbenzolsulfonat, kommerziell beispielsweise in Form der Marlon®-Marken (Hüls) erhältlich.

Beispiele für nichtaromatische Tenside sind nachfolgend aufgeführt, worin EO=Ethylenoxid-Einheiten, PO=Propylenoxid-Einheiten und BO=Butylenoxid-Einheiten bedeutet:
α.1) Fettalkohole mit 10 - 24 Kohlenstoffatomen mit 0-60 EO und/oder 0-20 PO und/oder 0-15 BO in beliebiger Reihenfolge. Die terminalen Hydroxygruppen dieser Verbindungen können durch einen Alkyl-,Cycloalkyl-oder Acylrest mit 1-24 Kohlenstoffatomen endgruppenverschlossen sein. Beispiele für derartige Verbindungen sind:
   Genapol®C-,L-,O-,T-,UD-,UDD-,X-Marken von Clariant, Plurafac®- und
   Lutensol®A-,AT-,ON-,TO-Marken von BASF, Marlipal®24- und 013 Marken von Condea, Dehypon®-Marken von Henkel, Ethylan®-Marken von Akzo-Nobel wie Ethylan CD 120 oder Synperonic®-Marken von Unichem, z.B. Synperonic®A7.
α.2) Anionische Derivate der unter α.1) beschriebenen Produkte in Form von Ethercarboxylaten, Sulfonaten, Sulfaten und Phosphaten und deren anorganischen (zB Alkali und Erdalkali) und organischen Salzen (z.B. auf Amin- oder Alkanolaminbasis) wie Genapol®LRO, Sandopan®-Marken, Hostaphat/Hordaphos®-Marken von Clariant.
   Copolymere bestehend aus EO,PO und/oder BO Einheiten wie z.B. Blockcopolymere wie die Pluronic®-Marken von der BASF und die Synperonic®-Marken von Uniquema mit einem Molekulargewicht von 400 bis 10⁸.
   Alkylenoxydaddukte von C₁ - C₉ Alkoholen wie Atlox®5000 von Uniquema oder Hoe®-S3510 von Clariant.
   Anionische Derivate der unter α.3) und α.4) beschriebenen Produkte in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis).
α.3) Fettsäure- und Triglyceridalkoxylate wie die Serdox®NOG-Marken von Condea oder die Emulsogen®-Marken von Clariant, Salze von aliphatischen, cycloaliphatischen und olefinischen Carbonsäuren und Polycarbonsäuren, sowie Alpha-Sulfofettsäureester wie von Henkel erhältlich.
α.4) Fettsäureamidalkoxylate wie die Comperlan®-Marken von Henkel oder die Amam®-Marken von Rhodia.
   Alkylenoxydaddukte von Alkindiolen wie die Surfynol®-Marken von Air Products. Zuckerderivate wie Amino- und Amidozucker von Clariant,Glukitole von Clariant, Alkylpolyglycoside in Form der APG®-Marken von Henkel oder wie Sorbitanester in Form der Span®- oder Tween®-Marken von Uniquema oder Cyclodextrinester oder -ether von Wacker.
α.5) Oberflächenaktive Cellulose- und Algin-, Pektin- und Guarderivate wie die Tylose®-Marken von Clariant,die Manutex®-Marken von Kelco und Guarderivate von Cesalpina.
   Alkylenoxydaddukte auf Polyolbasis wie Polyglykol®-Marken von Clariant. Grenzflächenaktive Polyglyceride und deren Derivate von Clariant.
α.6) Sulfosuccinate , Alkansulfonate, Paraffin- und Olefinsulfonate wie Netzer IS®, Hoe®S1728, Hostapur®OS, Hostapur®SAS von Clariant, Triton®GR7ME und GR5 von Union Carbide, Empimin®-Marken von Albright und Wilson, Marlon®-PS65 von Condea.
α.7) Sulfosuccinamate wie die Aerosol®-Marken von Cytec oder die Empimin®-Marken von Albright und Wilson.
α.8) Alkylenoxidaddukte von Fettaminen, quartäre Ammonium-Verbindungen mit 8 bis 22 Kohlenstoffatomen (C₈-C₂₂) wie zB. die Genamin®C,L,O,T-Marken von Clariant.
α.9) Oberflächenaktive, zwitterionische Verbindungen wie Tauride, Betaine und Sulfobetaine in Form von Tegotain®-Marken von Goldschmidt, Hostapon®T-und Arkopon®T-Marken von Clariant.
α.10) Per- oder polyfluorierte oberflächenaktive Verbindungen wie Fluowet®-Marken von Clariant, die Bayowet®-Marken von Bayer, die Zonyl®-Marken von DuPont und Produkte dieser Art von Daikin und Asahi Glass.
α.11) Grenzflächenaktive Sulfonamide z.B. von Bayer.
α.12) Grenzflächenaktive Polyacryl- und -methacrylderivate wie die Sokalan®-Marken von der BASF.
α.13) Oberflächenaktive Polyamide wie modifizierte Gelatine oder derivatisierte Polyasparginsäure von Bayer und deren Derivate.
α.14) Oberflächenaktive Polymere auf Basis von Maleinsäureanhydrid und/oder Umsetzungsprodukten von Maleinsäureanhydrid, sowie Maleinsäureanhydrid und/oder Umsetzungsprodukte von Maleinsäureanhydrid beinhaltende Copolymere wie die Agrimer®-VEMA-Marken von ISP.
α.15) Oberfächenaktive Derivate von Montan-, Polyethylen-, und Polypropylenwachsen wie die Hoechst®-wachse oder die Licowet®-Marken von Clariant.
α.16) Oberflächenaktive Phosphonate und Phosphinate wie Fluowet®-PL von Clariant.
α.17) Poly- oder perhalogenierte Tenside wie beispielsweise Emulsogen®-1557 von Clariant.

Die in den erfindungsgemäßen herbiziden Mitteln optional enthaltenen von den Tensiden b) verschiedenen Tenside sind vorzugsweise vom Typ der C₈-C₂₀-Alkylpolyglykolethersulfate, insbesondere C₁₀-C₁₈-Alkylpolyglykolethersulfate, die vorzugsweise in Form ihrer Salze, zB. Alkalisalze, wie Natrium- oder Kaliumsalze, und/oder Ammoniumsalze, aber auch als Erdalkalisalze wie Magnesiumsalze verwendet werden, wobei vorzugsweise 2 bis 5 Ethylenoxyeinheiten im Polyglykolteil enthalten sind. Besonders bevorzugt ist z.B. C₁₂/C₁₄-Fettalkoholdiglykolethe rsulfat-Natrium (Handelsname zB. Genapol ® LRO, Clariant GmbH).

Vorzugsweise enthalten die erfindungsgemäßen herbiziden Mittel neben den Komponenten a), b) und c) noch Wasser und gegebenenfalls organische Lösungsmittel und werden in Form einer wäßrigen konzentrierten Dispersion oder Emulsion formuliert oder als Tankmix in Form einer verdünnten Dispersion, Emulsion oder Lösung mit einem Verdünnungsgrad bis zu dem der gebrauchsfertigen Spritzbrühe hergestellt. Besonders bevorzugt ist ein als Tankmix hergestelltes herbizides Mittel, das zur Anwendung die bevorzugten Mengen an Herbizid a), Tensid b) und Humectant c) enthält.

Auch Mischungen oder Mischungsformulierungen mit anderen Wirkstoffen, wie z.B. Insektiziden, Akariziden, Herbiziden, Fungiziden, Safenem, Düngemitteln und/oder Wachstumsregulatoren sind gegebenenfalls möglich.

Zur Anwendung werden in handelsüblicher Form vorliegende konzentrierte Formulierungen gegebenenfalls in üblicher Weise verdünnt, Spritzpulver, emulgierbare Konzentrate, Dispersionen und wasserdispergierbare Granulate z.B. mittels Wasser. Staubförmige Zubereitungen, Sprüh- und Absorptionsgranulate, versprühbare Lösungen sowie als Tankmix hergestellte Spritzbrühen werden vor der Anwendung üblicherweise nicht mehr mit weiteren inerten Stoffen verdünnt. Allerdings kann es vorteilhaft oder notwendig sein, den Spritzbrühen weitere Mengen an Tensiden b), Humectant c) und/oder andere übliche Hilfsmittel, insbesondere selbstemulgierende Öle oder Paraffinöle zuzugeben.

Mit den äußeren Bedingungen wie Temperatur, Feuchtigkeit, Art des verwendeten Herbizids, variiert die erforderliche Aufwandmenge der Herbizide a). Sie kann innerhalb weiter Grenzen schwanken, z.B. zwischen 0,001 und 10 kg/ha oder mehr Aktivsubstanz, vorzugsweise liegt sie jedoch zwischen 0,005 und 5 kg/ha.

Die erfindungsgemäßen herbiziden Mittel, weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfaßt. Dabei ist es gleichgültig, ob die Substanzen im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen herbiziden Mittel kontrolliert werden können, ohne daß durch die Nennung eine Beschränkung auf bestimmte Arten erfolgen soll.

Auf der Seite der monokotylen Unkrautarten werden z.B. Avena, Lolium, Alopecurus, Phalaris, Echinochloa, Digitaria, Setaria sowie Bromusarten wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, lmperata sowie Sorghum und auch ausdauemde Cyperusarten gut erfaßt.

Bei dikotylen Unkrautarten erstreckt sich das Wirkungsspektrum auf Arten wie zB. Galium, Viola, Veronica, Lamium, Stellaria, Amaranthus, Sinapis, lpomoea, Matricaria, Abutilon und Sida auf der annuellen Seite sowie Convolvulus, Cirsium, Rumex und Artemisia bei den perennierenden Unkräutern.

Unter den spezifischen.Kulturbedingungen im Reis vorkommende Schadpflanzen wie z.B. Echinochloa, Sagittaria, Alisma, Eleocharis, Scirpus und Cyperus werden von den erfindungsgemäßen Mitteln ebenfalls hervorragend bekämpft.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Obgleich die erfindungsgemäßen herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, insbesondere Soja, oder Gramineen-Kulturen wie Weizen, Gerste, Roggen, Reis oder Mais, nur unwesentlich oder gar nicht geschädigt. Die vorliegenden Verbindungen eignen sich aus diesen Gründen sehr gut zur selektiven Bekämpfung von unerwünschtem Pflanzenwuchs in landwirtschaftlichen Nutzpflanzungen oder in Zerpflanzungen.

Darüber hinaus weisen die erfindungsgemäßen herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Emteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregem von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller lnhaltsstoffe. So sind transgene Pflanzen mit erhöhtem Stärkegehalt oder veränderter Qualität der Stärke oder solche mit anderer Fettsäurezusammensetzung des Emteguts bekannt.

Bevorzugt ist die Anwendung der erfindungsgemäßen Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist somit auch die Verwendung der erfindungsgemäßen Mittel als Herbizide zur Bekämpfung von Schadpflanzen, vorzugsweise in Pflanzenkulturen, wobei die Pflanzenkulturen auch transgene Pflanzenkulturen sein können.

Die erfindungsgemäßen herbiziden Mittel können auch nicht-selektiv zur Bekämpfung unerwünschten Pflanzenwuchses eingesetzt werden, z.B. in Plantagenkulturen, an Wegrändern, Plätzen, Industrieanlagen oder Eisenbahnanlagen.

Aufgrund der relativ geringen Aufwandmenge der erfindungsgemäßen herbiziden Mittel ist deren Verträglichkeit in aller Regel schon sehr gut. Insbesondere wird durch die erfindungsgemäßen Kombinationen eine Senkung der absoluten Aufwandmenge erreicht, verglichen mit der Einzelanwendung eines herbiziden Wirkstoffs.

Gegenstand der Erfindung ist deshalb auch ein Verfahren zur Bekämpfung von Schadpflanzen, vorzugsweise zur selektiven Bekämpfung von Schadpflanzen in Nutzpflanzenkulturen, dadurch gekennzeichnet, daß man eine herbizid wirksame Menge der genannten Herbizide a) in Kombination mit mindestens einem der Tenside b) und mindestens einem Humectant c) appliziert, z.B. im Vorauflauf, Nachauflauf oder im Vor- und Nachauflauf, vorzugsweise im Vorauflauf, zusammen oder hintereinander, auf die Pflanzen, Pflanzenteile, Pflanzensamen oder die Fläche auf der die Pflanzen wachsen, zB. die Anbaufläche.

In bevorzugter Verfahrensvariante werden die Herbizide a) in Aufwandmengen von 0,1 bis 400 g Aktivsubstanz/ha, bevorzugt von 0,5 bis 200 g Aktivsubstanz/ha, ausgebracht. Weiterhin bevorzugt ist die Ausbringung der Wirkstoffe in Form einer Fertigformulierung oder in Form von Tankmischungen, wobei die Einzelkomponenten, z.B. in Form von Formulierungen, gemeinsam im Tank mit Wasser gemischt werden und die erhaltene Spritzbrühe ausgebracht wird.

Da die Kulturpflanzenverträglichkeit der erfindungsgemäßen Kombinationen bei gleichzeitig sehr hoher Kontrolle der Schadpflanzen ausgesprochen gut ist, können diese als selektiv angesehen werden. In bevorzugter Verfahrensabwandlung werden herbizide Mittel mit den erfindungsgemäßen Wirkstoffkombinationen daher zur selektiven Bekämpfung unerwünschter Pflanzen eingesetzt.

Um die Verträglichkeit und/oder Selektivität der erfindungsgemäßen herbiziden Mittel gewünschtenfalls noch zu steigern kann es von Vorteil sein, diese gemeinsam in Mischung oder zeitlich - getrennt nacheinander zusammen mit Safenem oder Antidots anzuwenden.

Als Safener oder Antidots für die erfindungsgemäßen herbiziden Mittel in Frage kommende Verbindungen sind z. B. aus EP-A-333 131 (ZA-89/1960), EP-A-269 806 (US-A-4,891,057), EP-A-346 620 (AU-A-89/34951) und den internationalen Patentanmeldungen PCT/EP 90/01966 (WO-91108202) und PCT/EP 90102020 (WO-911078474) und dort zitierter Literatur bekannt oder können nach den dort beschriebenen Verfahren hergestellt werden. Weitere geeignete Safener kennt man aus EP-A-94 349 (US-A-4,902,304), EP-A-191 736 (US-A-4;881,966) und EP-A-0 492 366 und der dort zitierten Literatur.

In einer bevorzugten Ausführungsform enthalten die herbiziden Mittel der vorliegenden Erfindung daher einen zusätzlichen Gehalt an einer oder mehrerer Verbindungen, die als Safener oder Antidots wirken.

Besonders bevorzugte Antidots oder Safener oder Gruppen von Verbindungen die sich als Safener oder Antidots für die oben beschriebenen herbiziden Mittel der Erfindung eignen sind unter anderem:
a) Verbindungen vom Typ der Dichlorphenylpyrazolin-3-carbonsäure, vorzugsweise Verbindungen wie 1-(2,4-Dichlorphenyl)-5-(ethoxycarbonyl)-5-methyl-2-pyrazolin-3-carbonsäureethylester (Verbindung S1 -1, Mefenpyr-diethyl) und verwandte Verbindungen, wie sie in der internationalen Anmeldung WO 91/07874 (PCT/EP 90102020) beschrieben sind;
b) Derivate der Dichlorphenylpyrazolcarbonsäure, vorzugsweise Verbindungen wie 1-(2,4-Dichlörphenyl)-5-methyl-pyrazol-3-carbonsäureethylester (Verbindung S1-2), 1-(2,4-Dichlorphenyl)-5-isopropyl-pyrazol-3-carbonsäureethylester (Verbindung S1 -3), 1-(2,4-Dichlorphenyl)-5-(1,1-dimethyl-ethyl)pyrazol-3-carbonsäureethylester (Verbindung S1-4), 1-(2,4-Dichlorphenyl)-5-phenyl-pyrazol-3-carbonsäureethylester (Verbindung S1-5) und verwandte Verbindungen, wie sie in EP-A-0 333131 und EP-A-0269 806 beschrieben sind;
c) Verbindungen vom Typ der Triazolcarbonsäuren, vorzugsweise Verbindungen wie 1-(2,4-Dichlorphenyl)-5-trichlormethyl-(1 H)-1,2,4-triazol-3-carbonsäureethylester (Verbindung S1-6, Fenchlorazol) und verwandte Verbindungen (siehe EP-A-0 174 562 und EP-A-0 346 620);
d) Verbindungen vom Typ der Dichlorbenzyl-2-isoxazolin-3-carbonsäure, Verbindungen vom Typ der 5-Benzyl- oder 5-Phenyl-2-isoxazolin-3-carbonsäure, vorzugsweise Verbindungen wie 5-(2,4-Dichlorbenzyl)-2-isoxazolin-3-carbonsäureethylester (Verbindung S1 -7) oder 5-Phenyl-2-isoxazolin-3-carbonsäureethylester (Verbindung S1-8) und verwandte Verbindungen wie sie in der internationalen Patentanmeldung WO 91/08202 (PCTIEP 90/01966) beschrieben sind;
e) Verbindungen vom Typ der 8-Chinolinoxyessigsäure, vorzugsweise Verbindungen wie (5-Chlor-8-chinolinoxy)-essigsäure-(1 -methyl-hex -1 -yl)-ester (S2-1, Cloquintocet-mexyl),
   (5-Chlor-8-chinolinoxy)-essigsäure-(1,3-dimethyl-but-1-yl)-ester (S2-2),
   (5-Chlor-8-chinolinoxy)-essigsäure-4-allyl-oxy-butylester (S2-3),
   (5-Chlor-8-chinolinoxy)-essigsäure-1 -allyl-oxy-prop-2-ylester (S2-4),
   (5-Chlor-8-chinolinoxy)-essigsäureethylester (S2-5),
   (5-Chlor-8-chinolinoxy)-essigsäuremethylester (S2-6),
   (5-Chlor-8-chinolinoxy)-essigsäureallylester (S2-7),
   (5-Chlor-8-chinolinoxy)-essigsäure-2-(2-propyliden-iminoxy)-1-ethylester
   (S2-8), (5-Chlor-8-chinolinoxy)-essigsäure-2-oxo-prop-1 -ylester (S2-9) und verwandte Verbindungen wie sie in EP-A-0 086 750, EP-A-0 094 349 und
   EP-A-0 191 736 oder EP-A-0 492 366 beschrieben sind;
f) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallylester, (5-Chlor-8-chinolinoxy)-malonsäuremethylethylester und verwandte Verbindungen wie sie in der deutschen Patentanmeldung EP-A-0 582 198 beschrieben und vorgeschlagen worden sind;
g) Wirkstoffe vom Typ der Phenoxyessig- bzw. -propionsäurederivate bzw. der aromatischen Carbonsäuren, wie z. B. 2,4-Dichlorphenoxyessigsäure(ester) (2,4-D), 4-Chlor-2-methyl-phenoxy-propionsäure (Mecoprop), MCPA oder 3,6-Dichtor 2-methoxy-benzoesäure(ester) (Dicamba).
h) Verbindungen vom Typ der 5,5-Diphenyl-2-isoxazolin-3-carbonsäute, vorzugsweise 5,5-Diphenyl-2-isoxazolin-3-carbonsäureethylester (S3-1, lsoxadifen-ethyl).
i) Verbindungen, die als Safener z.B. für Reis bekannt sind wie Fenclorim (= 4,6-Dichlor-2-phenylpyrimidin, Pesticide Manual, 11. Auflage, 1997, S. 511-512), Dimepiperate (= Piperidin-1 -thiocarbonsäure-S-1 -methyl-1 -phenylethylester, Pesticide Manual, 11. Auflage, 1997, S. 404-405), Daimuron (= 1 -(1 -Methyl- 1-phenylethyl)-3-p-tolyl-hamstoff, Pesticide Manual, 11. Auflage, 1997, S. 330), Cumyluron (= 3-(2-Chlorphenylmethyl)-1 -(1 -methyl-1-phenyl-ethyl)- hamstoff, JP-A-60/087254), Methoxyphenon (= 3,3'-Dimethyl-4-methoxy- benzophenon, CSB (= 1-Brom-4-(chlormethylsulfonyl)-benzol, CAS-Reg. Nr. 54091-06-4). Die genannten Verbindungen sind außerdem zumindest teilweise in der EP-A-0 640 587 beschrieben, auf die hiermit zu Offenbarungszwecken Bezug genommen wird.
j) Eine weitere wichtige Gruppe von als Safenem und Antidoten geeignete Verbindungen ist aus der WO 95107897 bekannt.

Die Safener (Antidote) der vorstehenden Gruppen a) bis j) reduzieren oder unterbinden phytotoxische Effekte, die beim Einsatz der herbiziden Mittel gemäß der Erfindung in Nutzpflanzenkulturen auftreten können, ohne die Wirksamkeit der Herbizide gegen Schadpflanzen zu beeinträchtigen. Hierdurch kann das Einsatzgebiet der erfindungsgemäßen herbiziden Mittel erheblich erweitert werden und insbesondere ist durch die Verwendung von Safenem der Einsatz von herbiziden Mitteln möglich, die bislang nur beschränkt oder mit nicht ausreichendem Erfolg eingesetzt werden konnten, d. h. von Kombinationen, die ohne Safener in niedrigen Dosierungen mit wenig Breitenwirkung zu nicht ausreichender Kontrolle der Schadpflanzen führten.

Die Komponenten a), b) und c) der herbiziden Mittel gemäß der Erfindung und die erwähnten Safener können zusammen (als fertige Formulierung oder im Tankmisch-Verfahren) oder in beliebiger Reihenfolge nacheinander ausgebracht werden. Das Gewichtsverhältnis SafenerHerbizid (Verbindung(en) der Formel (1) und/oder ihre Salze) kann innerhalb weiter Grenzen variieren und liegt vorzugsweise im Bereich von 1 : 100 bis 100 : 1, insbesondere von 1 : 100 bis 50: 1. Die jeweils optimalen Mengen an Herbizid(en) und Safener(n) sind üblicherweise vom Typ des herbiziden Mittels und/oder vom verwendeten Safener sowie von der Art des zu behandelnden Pflanzenbestandes abhängig.

Die Safener können je nach ihren Eigenschaften zur Vorbehandlung des Saatgutes der Kulturpflanze (Beizung der Samen) verwendet werden oder vor der Saat in die Saatfurchen eingebracht oder zusammen mit der Herbizidmischung vor oder nach dem Auflaufen der Pflanzen angewendet werden.

Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit der Herbizidmischung. Hierzu können Tankmischungen oder Fertigformulierungen eingesetzt werden.

Die benötigten Aufwandmengen der Safener können je nach Indikation und verwendetem Herbizid innerhalb weiter Grenzen schwanken und liegen in der Regel im Bereich von 0,001 bis 1 kg, vorzugsweise 0,005 bis 0,2 kg Wirkstoff je Hektar.

Die Ausbringung der erfindungsgemäßen herbiziden Mittel kann in üblicher Weise erfolgen, zum Beispiel mit Wasser als Träger in Spritzbrühmengen von etwa 5 bis 4000 Liter/ha. Eine Anwendung der Mittel im sog. Low-Volume- und Ultra-Low-Volume-Verfahren (ULV) ist ebenso möglich wie ihre Applikation in Form von Granulaten und Mikrogranulaten.

Eine bevorzugte Verwendung betrifft den Einsatz von herbiziden Mitteln, die Gehalte an Komponenten a), b) und c) in einer synergistisch wirksamen Menge aufweisen. Zur Erfindung gehören auch Mischungen von einem oder mehreren Herbiziden a), mit einem oder mehreren Tensiden b) und einem oder mehreren Humectants c).

Daneben können in den herbiziden Mitteln der Erfindung zur Abrundung der Eigenschaften, meist in untergeordneten Mengen, zusätzlich eines, zwei oder mehrere von dem Herbizid a) verschiedene agrochemische Wirkstoffe (z.B. Herbizide, Insektizide, Fungizide, Safener) enthalten sein.

Damit ergeben sich zahlreiche Möglichkeiten mehrere Wirkstoffe miteinander zu kombinieren und gemeinsam zur Bekämpfung von Schadpflanzen in Pflanzenkulturen einzusetzen, ohne vom Gedanken der Erfindung abzuweichen.

So können in einer bevorzugten Ausführungsform zB. verschiedene Wirkstoffe der Formel (I) miteinander kombiniert werden, z.B.
Mesosulfuron-methyl + lodosulfuron-methyl,
Mesosulfuron-methyl + Iodosulfuron-methyl-Natrium,
Mesosulfuron-methyl + Foramsulfuron,
Mesosulfuron-methyl + Foramsulfuron-Natrium,
Mesosutfuron-methyl-Natrium + lodosulfuron-methyl,
Mesosulfuron-methyl-Natrium + lodosulfuron-methyl-Natrium,
Mesosulfuron-methyl-Natrium + Foramsulfuron,
Mesosulfuron-methyl-Natrium + Foramsulfuron-Natrium,
Foramsulfuron + lodosulfuron-methyl,
Foramsulfuron + lodosulfuron-methyl-Natrium,
Foramsulfuron-Natrium + Iodosulfuron-methyl,
Foramsulfuron-Natrium + lodosulfuron-methyl-Natrium.

Die vorbeschriebenen Wirkstoffmischungen werden vorzugsweise mit einem Silkontensid, wie Silwet® (Witco/Osi Corp.) als Komponente b) und einem Milchsäurederivat wie Natrium-Lactat als Komponente c) kombiniert. Darüber hinaus können vorzugsweise einer oder mehrere Safener enthalten sein, insbesondere die Safener Mefenpyr-diethyl (S1-1), Cloquintocet-mexyl (S2-1) und Isoxadifen-ethyl (S3-1).

Zusammenfassend kann gesagt werden, daß die erfindungsgemäßen herbiziden Mittel ausgezeichete herbizide Wirkung aufweisen, und in einer bevorzugten Ausführungsform überadditive (= synergistische) Effekte auftreten. Dabei ist die Wirkung in den Kombinationen stärker als die der eingesetzten Einzelkomponenten bei alleiniger Anwendung.

Diese Effekte erlauben unter anderem eine Reduzierung der Aufwandmenge, die Bekämpfung eines breiteren Spektrums von Unkräutern und Ungräsem, die Schließung von Wirkungslücken, eine schnellere und sicherere Wirkung, eine längere Dauerwirkung, eine komplette Kontrolle der Schadpflanzen mit nur einer oder wenigen Applikationen, und eine Ausweitung des Anwendungszeitraumes. Die genannten Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch die erfindungsgemäßen Kombinationen bezüglich der beschriebenen Eigenschaften deutlich übertroffen. So zeigt sich eine wesentlich verbesserte Wirkungssicherheit unter verschiedenen Umweltbedingungen.

Die nachfolgenden Ausführungsbeispiele erläutem die Erfindung und haben keinerlei limitierenden Charakter.

### Beispiele

### Beispiel 1

### Zubereitung der Spritzbrühe

Es wurde eine Wasseraufwandmenge von 300l/ha vorgelegt. Anschließend wurden die Einzelkomponenten Herbizid, Tensid und Humectant gemäß den in Tabelle 1 angegebenen Aufwandmengen unter Rühren zugegeben, so daß eine homogene Spritzbrühe entstand. Als Herbizid wurde Mesosulfuron-methyl als 20-prozentiges wasserdispergierbares Pulver eingesetzt. Als Tensid wurde Silwet® L77 (Wacker) und als Humectant Na-Lactat als 50-prozentige wässrige Lösung (Merck KGaA, Darmstadt) verwendet.

### Beispiel 2

### Wirksamkeit gegen Schadgräser

Samen der Schadpflanzen AVEFA und LOLMU wurden in einer Klimakammer in einem sandigen Lehmboden in 13er Rundtöpfen ausgesät und angegossen. Während der gesamten Versuchsdauer wurde das Substrat nur minimal bewässert. Es wurde eine Tagestemperatur von 18°C und eine Nachttemperatur von 16°C eingehalten, wobei durch eine Zusatzbeleuchtung mit Natriumdampfleuchten (ca. 7000 lx) eine einheitliche Tageslänge von 16 Stunden erreicht wurde. Die relative Luftfeuchtigkeit betrug 50%. Vier Wochen nach der Aussaat wurden die Pflanzen auf einer Laborspritzbahn mit der gemäß Beispiel 1 hergestellten Spritzbrühe behandelt. Die Wasseraufwandmenge für die Spritzappplikation der Präparate betrug 300 l/ha. Nach der Behandlung wurden die Pflanzen wieder in der Klimakammer aufgestellt Die optische Bonitur erfolgte 14 Tage nach der Applikation, nach einer Prozentskala von 0%=keine Schädigung bis 100%=alle Pflanzen abgestorben. Die Resultate sind in Tabelle 1 aufgeführt.

**Tabelle 1**

| Komponenten | | Schädigung in % | |
|---|---|---|---|
| | g a.i./ha | AVEFA | LOLMU |
| Mesosulfuron | 60 | 22 | 18 |
| Mesosulfuron | 60 | 32 | 36 |
| + Silwet® L77 | 50 | | |
| Mesosulfuron | 60 | 68 | 60 |
| + Silwet® L77 | 50 | | |
| + Na-Lactat | 150 | | |
| Abkürzungen: g a.i./ha = g Aktivsubstanz/Hektar AVEFA = Avena fatua LOLMU = Latium multiflorum Mesosulfuron = Mesosulfuron-methyl | | | |

## Patentansprüche

1. Herbizides Mittel enthaltend
a) einen oder mehrere herbizide Wirkstoffe aus der Gruppe der gräserwirksamen Sulfonylharnstoffe der Formel (1) und/oder deren Salze, 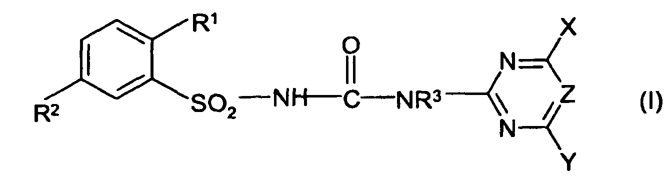 , worin
R¹ CO-R^{a} ist, worin R^{a} gleich OH, C₁-C₄-Alkoxy oder NR^{b}R^{c} ist, worin R^{b} und R^{c} unabhängig voneinander gleich oder verschieden H oder C₁-C₄-Alkyl sind,
R² Halogen oder (A)ₙ-NR^{d}R^{e} ist, worin n gleich Null oder 1 ist, A eine Gruppe CR'R" ist, worin R' und R" unabhängig voneinander gleich oder verschieden H oder C₁-C₄-Alkyl sind, R^{d} gleich H oder C₁-C₄-Alkyl ist und R^{e} ein Acyl-Rest ist,
R³ H oder C₁-C₄-Alkyl ist,
X und Y abhängig voneinander gleich oder verschieden C₁-C₆-Alkyl, C₁-C₆-Alkoxy oder C₁-C₆-Alkylthio sind, wobei jeder der drei genannten Reste unsubstituiert oder durch einen oder mehrere Reste aus der Gruppe Halogen, C₁-C₄-Alkoxy und C₁-C₄-Alkylthio substituiert ist, oder C₃-C₆-Cycloalkyl, C₂-C₆-Alkenyl, C₂-C₆-Alkynyl, C₃-C₆-Alkenyloxy oder C₃-C₆-Alkynyloxy sind, vorzugsweise C₁-C₄-Alkyl oder C₁-C₄-Alkoxy, und
Z gleich CH oder N ist,
b) eines oder mehrere Silikontenside, und
c) eines oder mehrere Humectants.

2. Herbizides Mittel nach Anspruch 1, enthaltend als Komponente a) einen oder mehrere herbizide Wirkstoffe aus der Gruppe Mesosulfuron-methyl, Mesosulfuron-methyl-Natrium, lodosulfuron-methyl, lodosulfuron-methyl-Natrium, Foramsulfuron und Foramsulfuron-Natrium.

3. Herbizides Mittel nach Anspruch 1 oder 2, zusätzlich enthaltend eine oder mehrere weitere Komponenten aus der Gruppe enthaltend agrochemische Wirkstoffe, im Pflanzenschutz übliche Zusatzstoffe und Formulierungshilfsmittel.

4. Verfahren zur Bekämpfung von Schadpflanzen, worin das herbizide Mittel, definiert gemäß einem oder mehreren der Ansprüche 1 bis 3, im Vorauflauf, Nachauflauf oder im Vor- und Nachauflauf auf die Pflanzen, Pflanzenteile, Pflanzensamen oder die Fläche auf der die Pflanzen wachsen, z.B. die Anbaufläche appliziert wird.

5. Verfahren nach Anspruch 4 zur selektiven Bekämpfung von Schadpflanzen in Pflanzenkulturen.

6. Verwendung des nach einem der Ansprüche 1 bis 3 definierten herbiziden Mittels zur Bekämpfung von Schadpflanzen.

7. Verfahren zur Herstellung eines herbiziden Mittels, definiert gemäß einem oder mehreren der Ansprüche 1 bis 3, wobei die Komponenten a), b) und c) gemischt werden.

8. Verfahren gemäß Anspruch 7, worin die Komponenten a), b) und c) im Tankmischverfahren gemischt werden.

## Claims

1. A herbicidal composition comprising
a) one or more herbicidal active substances from the group of the grass-controlling sulfonylureas of the formula (I) and/or their salts 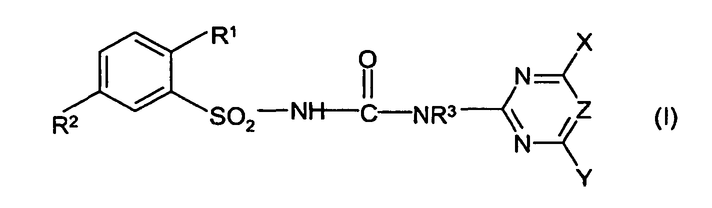 in which
R¹ is CO-R^{a}, in which R^{a} is OH, C₁-C₄-alkoxy or NR^{b}R^{c}, in which R^{b} and R^{c} independently of one another are identical or different and are H or C₁-C₄-alkyl,
R² is halogen or (A)ₙ-NR^{d}R^{e} in which n is zero or 1, A is a group CR'R" in which R' and R" independently of one another are identical or different and are H or C₁-C₄-alkyl, R^{d} is H or C₁-C₄-alkyl and R^{e} is an acyl radical,
R³ is H or C₁-C₄-alkyl,
X and Y independently of one another are identical or different and are C₁-C₆-alkyl, C₁-C₆-alkoxy or C₁-C₆-alkylthio, where each of the three abovementioned radicals is unsubstituted or substituted by one or more radicals selected from the group consisting of halogen, C₁-C₄-alkoxy and C₁-C₄-alkylthio, or are C₃-C₆-cycloalkyl, C₂-C₆-alkenyl, C₂-C₆-alkynyl, C₃-C₆-alkenyloxy or C₃-C₆-alkynyloxy, preferably C₁-C₄-alkyl or C₁-C₄-alkoxy, and
Z is CH or N,
b) one or more silicone surfactants, and
c) one or more humectants.

2. A herbicidal composition as claimed in claim 1, comprising as component a) one or more herbicidal active substances from the group consisting of mesosulfuron-methyl, mesosulfuron-methyl-sodium, iodosulfuron-methyl, iodosulfuron-methyl-sodium, foramsulfuron and foramsulfuron-sodium.

3. A herbicidal composition as claimed in claim 1 or 2, additionally comprising one or more further components from the group consisting of agrochemical active substances, additives conventionally used in the art of crop protection, and formulation auxiliaries.

4. A method of controlling harmful plants, wherein the herbicidal composition defined as in one or more of claims 1 to 3 is applied pre-emergence, post-emergence or pre- and post-emergence to the plants, plant parts, plant seeds or the area on which the plants grow, for example under cultivation.

5. The method as claimed in claim 4 for selectively controlling harmful plants in plant crops.

6. The use of a herbicidal composition as defined in any of claims 1 to 3 for controlling harmful plants.

7. A method for the preparation of a herbicidal composition defined as in one or more of claims 1 to 3, wherein components a), b) and c) are mixed.

8. The method as claimed in claim 7, wherein the components a), b) and c) are mixed by the tank mix method.

## Revendications

1. Agent herbicide contenant
a) une ou plusieurs substances actives herbicides du groupe des sulfonylurées efficaces sur les mauvaises herbes de formule (I) et/ou de leurs sels, 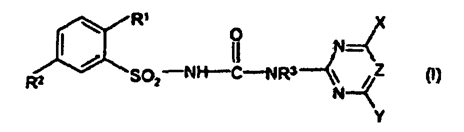 dans laquelle
R¹ représente CO-R^{a}, où R^{a} est identique à OH, alkoxy en C₁-C₄ ou NR^{b}R^{c}, où R^{b} et R^{c} sont indépendamment l'un de l'autre, identiques ou différents, un atome d'hydrogène ou un groupe alkyle en C₁-C₄,
R² représente un atome d'halogène ou (A)ₙ-NR^{d}R^{e} où n vaut 0 ou 1, A est un groupe CR'R'', où R' et R'' représentent indépendamment l'un de l'autre, identiques ou différents, un atome d'hydrogène ou un groupe alkyle en C₁-C₄, R^{d} est identique à un atome d'hydrogène ou un groupe alkyle en C₁-C₄ et R^{e} est un reste acyle,
R³ représente un atome d'hydrogène ou un groupe alkyle en C₁-C₄,
X et Y représentent indépendamment l'un de l'autre, identiques ou différents, un groupe alkyle en C₁-C₆, alkoxy en C₁-C₆ ou (alkyl en C₁-C₆)thio, où chacun des trois derniers restes est non substitué ou substitué par un ou plusieurs restes du groupe composé d'un atome d'halogène, un groupe alkoxy en C₁-C₄ et (alkyl en C₁-C₄)thio, ou un groupe cycloalkyle en C₃-C₆, alcényle en C₂-C₆, alcynyle en C₂-C₆, alcényloxy en C₃-C₆ ou alcynyloxy en C₃-C₆, de préférence alkyle en C₁-C₄ ou alkoxy en C₁-C₄, et
Z est identique à CH ou N,
b) un ou plusieurs tensio-actifs siliconés,
c) un ou plusieurs humectants.

2. Agent herbicide selon la revendication 1, contenant en tant que composant a) une ou plusieurs substances actives herbicides du groupe composé de Mesosulfuron-methyl, Mesosulfuron-methyl-sodium, Iodosulfuron-methyl, Iodosulfuron-methyl-sodium, Foramsulfuron et Foramsulfuron-sodium.

3. Agent herbicide selon la revendication 1 ou 2, contenant en plus un ou plusieurs autres composants du groupe contenant les substances actives agrochimiques, les adjuvants de formulation et les additifs courants dans le domaine phytosanitaire.

4. Procédé pour lutter contre les plantes adventices, dans lequel on applique l'agent herbicide, défini selon une ou plusieurs des revendications 1 à 3, en pré-levée, post-levée ou en pré- et post-levée sur les plantes, parties de plantes, graines de plantes ou sur la surface sur lesquelles poussent les plantes, par exemple la surface cultivée.

5. Procédé selon la revendication 4, pour lutter de façon sélective contre les plantes adventices dans les cultures de plantes.

6. Utilisation de l'agent herbicide défini selon l'une des revendications 1 à 3, pour lutter contre les plantes adventices.

7. Procédé pour la préparation d'un agent herbicide, défini selon une ou plusieurs des revendications 1 à 3, dans lequel on mélange les composants a), b) et c).

8. Procédé selon la revendication 7, dans lequel on mélange les composants a), b) et c) selon le procédé de mélange extemporané.
